(19) Europäisches Patentamt
European Patent Office
Office européen des brevets

(11) Publication number : 0 208 311 B1

# (12) EUROPEAN PATENT SPECIFICATION

(45) Date of publication of patent specification : **16.01.91 Bulletin 91/03**

(51) Int. Cl.$^5$ : **C07C 249/04**

(21) Application number : **86109400.1**

(22) Date of filing : **09.07.86**

## (54) Catalytic process for preparing cyclohexanone-oxime.

(30) Priority : **10.07.85 IT 2151185**

(43) Date of publication of application : **14.01.87 Bulletin 87/03**

(45) Publication of the grant of the patent : **16.01.91 Bulletin 91/03**

(84) Designated Contracting States : **AT BE DE FR GB NL SE**

(56) References cited : **EP-A- 0 004 676**

(73) Proprietor : **MONTEDIPE S.r.l.**
**31, Foro Buonaparte**
**I-20121 Milan (IT)**

(72) Inventor : **Roffia, Paolo**
**25, via Valletta**
**I-21047 Saronno Varese (IT)**
Inventor : **Padovan, Mario**
**1, via Villa Mirabello**
**I-20125 Milan (IT)**
Inventor : **Moretti, Enrico**
**3/G, Largo Ungaretti**
**I-20020 Arese Milan (IT)**
Inventor : **De Alberti, Giordano**
**4, Largo Brianzoni**
**I-21010 Besnate Varese (IT)**

(74) Representative : **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**D-8000 München 40 (DE)**

EP 0 208 311 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

EP-A-4676 describes a direct process for the production of oximes, among others cyclohexanone-oxime, wherein a mixture of ketone, ammonia and oxygen is contacted, at a temperature of from 50° to 500°C, with a solid catalyst having a certain surface area. Preferred catalysts are, among many others, catalysts comprising silica and/or zirconia and/or an oxide of a transition metal of Group 3-8 of the Periodic Table.

DE-C-1 245 371 teaches the preparation of cyclohexanone-oxime by catalytic reaction, in the liquid phase, of cyclohexanone with ammonia and hydrogen peroxide at 5 to 40°C, in the presence of a catalyst consisting of phospho-tungstic acid or of similar compounds. A drawback of this method is, however, that this type of catalyst is difficult to handle, particularly, during the separation of the product from the catalyst.

It has now been found that it is possible to obtain the same high yields by using a completely different catalyst that is easier to handle and simplifies the process in all its steps.

Thus, the present invention relates to a catalytic process for preparing cyclohexanone-oxime by reacting cyclohexanone with $NH_3$ and $H_2O_2$ in the liquid phase at a temperature of from 25 to 100°C and at a pressure equal to or higher than atmospheric pressure, which process is characterized in that the catalyst substantially consists of a highly crystalline, $SiO_2$-containing substance having a zeolitic structure and, in particular, of a titanium-silicalite, optionally in admixture with an inert binder. Titanium-silicalites are known compounds which, for example, are described in GB-A-2 024 790 and 2 071 071.

The reaction temperature preferably is in the range of from 40 to 90°C. Tests carried out at 15°C have provided results that are not completely satisfactory.

A pressure above atmospheric pressure is preferred since it promotes the development of the reaction.

Other substances of zeolitic nature which catalyse the reaction are, first of all, the various types of silicalite, such as silicalite I (see, e.g., US-A-4 061 724), silicalite II, zirconium-silicalites and hafnium-silicalites.

Another class of analogous catalysts are the metalsilicalites, e.g., borosilicates (boralites), beryllosilicates, chromo-silicates, vanadium-silicates, zirconiumsilicates, gallium-silicates and ferro-silicates which are, in part, described in GB-A-2 024 790.

A third class of catalysts of analogous type consists of the known aluminium-silicates, generally known as "zeolites", particularly the zeolites of type Y, the zeolites ZSM5, the zeolites ZSM 11 and the other zeolites ZSM described in EP-A-129 239, 141 514 and 143 642, as well as the zeolites MB 28 described in EP-A-21 445. Some of these zeolites have already been successfully utilized in the aminoximation of cyclohexanone in the gas phase with NH3 and air.

According to another preferred embodiment of the process of the present invention the titanium-silicalite mentioned above is replaced, at least in part, by a zirconium-silicalite or a boralite.

The process according to the present invention can be carried out either continuously or discontinuously, provided that reactors with surfaces that are resistant to hydrogen peroxide are used. When the reaction is carried out in batch , it is advisable that 0.1 to 50 parts by weight (preferably from 1 to 20 parts by weight) of pure catalyst (excluding binder) for 100 parts by weight of cyclohexanone be used. If the reaction is performed in a continuous manner, it is preferred to employ a space velocity of from 0.1 to 100 kg/h of cyclohexanone ($C_6H_{10}O$) per kg of catalyst. The molar ratio of $H_2O_2$ :$C_6H_{10}O$ is, generally, in the range of from 0.5 to 2.5 and, preferably, from 1 to 1.5, whereby $H_2O_2$ means 100% pure hydrogen peroxide (i.e., dilution water excluded). Water ($H_2O$) is the most suitable liquid vehicle for the reaction. However, it is also possible to use organic water-soluble solvents capable of dissolving both pure ammonia and its aqueous solutions such as, e.g., methanol, ethanol, propanol, isopropanol, butanol, isobutanol, tertiary butanol and mixtures thereof. Solvents with carbonyl functions such as aldehydes and ketones should be excluded.

The reaction water, which is formed according to the equation :

$$C_6H_{10}O + H_2O_2 + NH_3 \longrightarrow C_6H_{10} = NOH + 2H_2O \qquad (I)$$

gradually increases the amount of liquid vehicle as the conversion to oxime proceeds. During the reaction considerable amounts of peroxy-di-cyclohexyl-amine of the formula

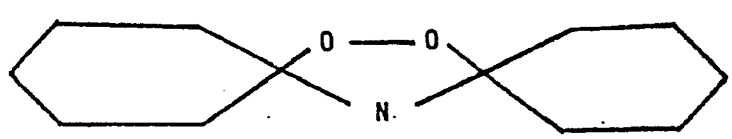

(II)

are also formed.

Ammonia should always be added before the hydrogen peroxide and in excess ($NH_3 : C_6H_{10}O \geq 1$, preferably ≥1.5 moles/mol). Otherwise, undesired side-reactions occur.

At the end of the reaction, the cyclohexanone-oxime can be separated by different methods, for example, through extraction with suitable solvents such as benzene, toluene and the cyclohexanone as used for the synthesis, whereby a hydrophobic organic phase and an aqueous phase are formed. Cyclohexanone-oxime and unreacted cyclohexanone form the organic layer. The aqueous layer which contains the excess $NH_3$ as well as traces of cyclohexanone and oxime can be recycled to the reaction zone (ammoximation zone).

The following examples illustrate the invention without, however, limiting it.

## EXAMPLE 1

A glass reactor, equipped with a stirrer and a heating jacket, was first blanketed with an inert gas (nitrogen). Subsequently, 1.5 g of a catalyst consisting of a finely ground powder of titanium-silicalite containing 3.85% by weight of highly crystalline titanium oxide (average diameter of the particles ≤5 µm) was charged. 50 ml of a 32% by weight aqueous solution of ammonia were added to the catalyst. The mixture was stirred and 9.5 g of cyclohexanone were charged. The three-phase system (solid-aqueous-organic) formed was kept homogenous by stirring vigorously. Heating was started by conveying a liquid at 60°C into the jacket. Simultaneously, a 32% by weight aqueous solution of hydrogen peroxide was fed to the reactor by means of a metering pump. After 15 minutes, the temperature in the reactor reached 60°C while the pressure rose to a value of from 80 to 93 KPa (600 to 700 mm Hg) above atmospheric pressure. The addition of $H_2O_2$ was performed within 3.5 hours, during which time the pressure decreased. The temperature was maintained at 60°C and stirring was continued for a further 1.5 hours, whereafter the test was stopped and the mixture was cooled.

50 ml of toluene were added to the resulting suspension and, after stirring for a few minutes, the aqueous phase and the organic phase were separated from the catalyst by filtration. The liquid phases were separated in a separation funnel and the aqueous phase was extracted with two portions of toluene of 30 ml each. The toluene solutions were combined and analysed. The analysis revealed a cyclohexanone conversion of 95% and a selectivity to cyclohexanone-oxime , of 79.45% ; the selectivity of hydrogen peroxide to oxime was 68.7%. At the end, about 15% of the starting cyclohexanone was found to be in the form of peroxy-dicyclohexylamine (see formula II above).

## EXAMPLES 2 (Comparative Test) and 3

Example 1 was repeated, varying temperature and pressure. The data and results given in table 1 prove that the selectivity of the conversion $H_2O_2 \rightarrow$ oxime is very adversely affected when operating under vacuum.

## EXAMPLE 4 (Comparative Test)

Example 1 was repeated, bringing the pressure (gauge) to zero and considerably lowering the temperature (down to 15°C). The unsatisfactory results shown in table 1 prove that it is disadvantageous to excessively reduce the thermal level of the ammoximation.

## EXAMPLE 5

Example 1 was repeated, replacing titanium silicalite by a zirconite (zirconium-silicalite). Analogous results were obtained.

## EXAMPLE 6

Example 1 was repeated, replacing titanium-silicalite by a boralite (boron-silicate). Analogous results were obtained.

TABLE 1 (a)

| Ex. | PARAMETERS | | | | | PRODUCTS | | | | | | | |
|---|---|---|---|---|---|---|---|---|---|---|---|---|---|
| | $C_6H_{10}O$ (g) | $H_2O_2$ 32% b.w. | T (°C) | Time (h) | P (mmHg) kPa (b) | Liquid phase aqueous (g) | Liquid phase organic (g) | Gas composition $N_2O$ (vol.%) | Gas composition $O_2$ (vol.%) | Conversion (%) $C_6H_{10}O$ | Conversion (%) $H_2O_2$ | Selectivity (%) $C_6H_{10}O$ | Selectivity (%) $H_2O_2$ |
| 1 | 9.50 | 11.7 | 60 | 3 1/2 | (75)10 | 52.0 | 127 | 17.22 | 23.14 | 95.35 | 91.87 | 79.45 | 68.73 |
| 2(*) | 9.50 | 11.55 | 40 | " | negative | 50.8 | 114.5 | - | - | 90.37 | 79.20 | 30.97 | 25.74 |
| 3 | 9.50 | 11.7 | 25 | " | 0 | 57.0 | 120 | 0.335 | 95.49 | 82.56 | 98.13 | 20.53 | 15.37 |
| 4(*) | 9.55 | 11.8 | 15 | 3 3/4 | 0 | 71.3 | 91 | 0.094 | 69.07 | 47.79 | 95.48 | 16.70 | 7.22 |

(*) Comparative test.

(a) In all the tests, 50 ml of aqueous $NH_3$ were added and 1.5 g of Ti-silicalite were used.

(b) Above atmospheric pressure.

(c) Selectivity to oxime.

Note : Nitrogen protoxide derives from the decomposition of hydroxylamine, which forms in a parallel reaction.

## Claims

1. A catalytic process for preparing cyclohexanone-oxime by reacting cyclohexanone with ammonia and hydrogen peroxide in the liquid phase at a temperature of from 25 to 100°C and at a pressure equal to or higher than atmospheric pressure, characterized in that the catalyst substantially consists of a highly crystalline substance containing $SiO_2$ and having a zeolitic structure.

2. The process of claim 1, wherein the catalyst is a titaniumsilicalite, optionally in admixture with an inert binder.

3. The process of claim 1 and/or claim 2, wherein a zirconiumsilicalite replaces, at least in part, titanium-silicalite.

4. The process of claim 1 and/or claim 2, wherein a boralite replaces, at least in part, titanium-silicalite.

5. The process of any one of claims 1 to 4, wherein the reaction temperature ranges from 40 to 90°C.

6. The process of any one of claims 1 to 5, wherein the space velocity of cyclohexanone ranges from 0.1 to 100 kg/h per kg of pure catalyst (binder excluded).

7. The process of any one of claims 1 to 6, wherein the $H_2O_2 : C_6H_{10}O$ molar ratio ranges from 0.5 to 2.5, where $H_2O_2$ means pure hydrogen peroxide (dilution water excluded).

8. The process of any one of claims 1 to 7, wherein $NH_3$ is added prior to $H_2O_2$, the $NH_3 : C_6H_{10}O$ molar ratio being $\geq 1$, preferably $\geq 1.5$.

## Ansprüche

1. Katalytisches Verfahren zur Herstellung von Cyclohexanonoxim durch Umsetzen von Cyclohexanon mit Ammoniak und Wasserstoffperoxid in flüssiger Phase bei einer Temperatur von 25 bis 100°C und einem Druck, der gleich oder höher als atmosphärischer Druck ist, dadurch gekennzeichnet, daß der Katalysator im wesentlichen aus einer hochkristallinen Substanz, die $SiO_2$ enthält und eine Zeolith-Struktur aufweist, besteht.

2. Verfahren nach Anspruch 1, worin der Katalysator ein Titansilikalit ist, gegebenenfalls in Mischung mit einem inerten Bindemittel.

3. Verfahren nach Anspruch 1 und/oder Anspruch 2, worin ein Zirkoniumsilikalit zumindest teilweise Titansilikalit ersetzt.

4. Verfahren nach Anspruch 1 und/oder Anspruch 2, worin ein Boralit zumindest teilweise Titansilikalit ersetzt.

5. Verfahren nach irgendeinem der Ansprüche 1 bis 4, worin die Reaktionstemperatur im Bereich von 40 bis 90°C liegt.

6. Verfahren nach irgendeinem der Ansprüche 1 bis 5, worin die Raumgeschwindigkeit von Cyclohexanon im Bereich von 0,1 bis 100 kg/h pro kg reinem Katalysator (Bindemittel ausgeschlossen) liegt.

7. Verfahren nach irgendeinem der Ansprüche 1 bis 6, worin das Molverhältnis $H_2O_2 : C_6H_{10}O$ im Bereich von 0,5 bis 2,5 liegt, wobei $H_2O_2$ reines Wasserstoffperoxid (Verdünnungswasser ausgeschlossen) bedeutet.

8. Verfahren nach irgendeinem der Ansprüche 1 bis 7, worin $NH_3$ vor $H_2O_2$ zugefügt wird, wobei das Molverhältnis $NH_3 : C_6H_{10}O \geq 1$, vorzugsweise $\geq 1,5$ ist.

## Revendications

1. Un procédé catalytique pour préparer le cyclohexanone-oxime, par réaction de cyclohexanone avec de l'ammoniac et du peroxyde d'hydrogène en phase liquide à une température de 25 à 100°C et sous une pression supérieure ou égale à la pression atmosphérique, caractérisé en ce que le catalyseur est essentiellement constitué d'une substance fortement cristalline contenant du $SiO_2$ et ayant une structure zéolitique.

2. Le procédé selon la revendication 1, dans lequel le catalyseur est une titanosilicalite, facultativement en mélange avec un liant inerte.

3. Le procédé selon la revendication 1 et/ou la revendication 2, dans lequel une zirconosilicalite remplace, au moins en partie, la titanosilicalite.

4. Le procédé selon la revendication 1 et/ou la revendication 2, dans lequel une boralite remplace au moins en partie la titanosilicalite.

5. Le procédé selon l'une quelconque des revendications 1 à 4, dans lequel la température de réaction

est comprise entre 40 et 90°C.

6. Le procédé selon l'une quelconque des revendications 1 à 5, dans lequel la vitesse spatiale horaire de la cyclohexanone est comprise entre 0,1 et 100 kg/h par kg de catalyseur pur (à l'exclusion du liant).

7. Le procédé selon l'une quelconque des revendications 1 à 6, dans lequel la proportion molaire $H_2O_2/C_6H_{10}O$ est comprise entre 0,5 et 2,5, $H_2O_2$ désignant le peroxyde d'hydrogène pur (à l'exclusion de l'eau de dilution).

8. Le procédé selon l'une quelconque des revendications 1 à 7, dans lequel on ajoute du $NH_3$ avant le $H_2O_2$, la proportion molaire $NH_3/C_6H_{10}O$ étant supérieure ou égale à 1, de préférence supérieure ou égale à 1,5.